# EUROPÄISCHE PATENTSCHRIFT

(11) **EP 1 479 510 B1**
(45) Veröffentlichungstag und Bekanntmachung des Hinweises auf die Patenterteilung: **21.04.2010**
(21) Anmeldenummer: 04011805.1
(22) Anmeldetag: 18.05.2004
(51) Int. Cl.: B30B 5/06, B27N 3/24, B29C 43/48

(54) **Verfahren und Anlage zur Stahlbandfürung in einer kontinuierlich arbeitenden Presse**
Method and installation for guiding a steel band in a continuously operating press
Procédé et installation pour le guidage d'une bande d'acier dans une presse à travail en continu

(30) Priorität: 18.05.2003 DE 10322227
(43) Veröffentlichungstag der Anmeldung: 24.11.2004
(73) Patentinhaber: Dieffenbacher GmbH + Co. KG, 75031 Eppingen (DE)
(72) Erfinder: Graf, Matthias, 75015 Bretten (DE)
(74) Vertreter: Hartdegen, Anton

(56) Entgegenhaltungen:
- DE-A1- 2 643 346
- DE-A1- 4 017 791
- DE-A1- 4 301 594
- DE-A1- 19 931 176
- GB-A- 2 350 095
- US-A- 4 527 686

## Beschreibung

Die Erfindung bezieht sich auf ein Verfahren zur Stahlbandführung in einer kontinuierlich arbeitenden Presse gemäß Oberbegriff des Anspruchs 1 und eine Anlage zur Durchführung des Verfahrens nach Anspruch 5.

Bei der Herstellung von Holzwerkstoffplatten aus Spänen, Fasern und/oder Schnitzeln oder der Herstellung von anderen Platten aus lignozellulosehaltigen Stoffen oder auch Kunststoffplatten werden in der Industrie zunehmend kontinuierlich arbeitende Pressen verwendet.

Die bekannten kontinuierlich arbeitenden Pressen weisen in der Regel bereits eine hohe Verfügbarkeit auf. Analysiert man die Ursachen für die Nichtverfügbarkeiten nach einer ABC-Analyse, stellt man fest, daß die häufigsten Stillstände einer kontinuierlich arbeitenden Presse durch Stahlbandund/oder Rollstangenverlauf zu verzeichnen sind.

Zur Regelung des Bandlaufes wird heute die Regelung der Antriebs- bzw. Auslauftrommeln und einer oder mehrere Bandregelwalzen im Rücklaufsystem der kontinuierlich arbeitenden Pressen eingesetzt. Problematisch sind Störgrößen, die im Pressbereich auf die Stahlbänder einwirken. Solche Störgrößen können zum Beispiel durch Schwankungen im Streugewicht entstehen. Dichteunterschiede im Pressgut, die zu asymmetrischen Kräfteprofilen in der kontinuierlich arbeitenden Presse führen, das heißt einseitige Streuüberhöhungen führen zum Beispiel zu einer spezifischen Druckerhöhung auf dieser Seite, die zu erhöhten Reibkräften im System Stahlband-Rollstangen-Abrollfächen führen. Die Reibkräfte üben einen Lenkeffekt auf die Stahlbänder in der Form aus, daß ein oder beide Stahlbänder auf die Seite mit dem höheren spezifischen Druck wandern bzw. verlaufen. Über die Schrägstellung der Auslauftrommeln bzw. Antriebstrommeln in der Horizontal-Ebene durch Stellantriebe wird dem Bandverlauf entgegengewirkt, um das Stahlband so im zulässigen Bereich der kontinuierlich arbeitenden Presse zu halten. Durch die Schrägstellung der Antriebstrommeln wirken Rückstellkräfte auf das Stahlband ein. Allerdings sind die Stahlbänder im Pressbereich durch den hohen Pressdruck massiv eingespannt, so daß die im Auslauf ansetzenden Rückstellkräfte nur bedingt eine Rückwirkung in den Pressbereich haben.

Bei zunehmend länger werdenden kontinuierlich arbeitenden Pressen wird die Effektivität der Schrägstellung der Antriebstrommeln als Regelmechanismus immer geringer und somit schwindet auch die Fähigkeit, dem System aufgezwungene Störgrößen auszugleichen bzw. entgegenzuwirken.

Nach dem bekannten Stand der Technik aus DE 40 17 791 C2, von dem die Erfindung ausgeht, erfolgt die Regelung des Stahlbandlaufs und die Rückstellung des Bandverlaufs dadurch, daß die Achsverstellung an einer Längsseite um den Winkel Beta an der Umlauf- und/oder der Antriebstrommelachse zumindest zu Beginn einer Verstellung eines Rahmenteils erfolgt, der durch die Kurzhubzylinder im Hochdruckbereich aus eine horizontalen Lage in eine derartige Schräglage gefahren wird, daß in Einlaufrichtung links oder rechts ein Druck- oder Wegprofil eingeregelt wird. Dabei wird durch ein bewußtes Schrägstellen der Gestelle ein asymmetrisches Druckprofil im Pressgut erzeugt und somit ein Lenkeffekt auf das Stahlband bewirkt, der von der Wirkweise identisch ist mit dem oben beschriebenen Mechanismus.

Dabei wird die Heizplatte im üblichen Betrieb nur bereichsweise einseitig angehoben. Eingebaute Verlaufssensoren im Pressbereich geben die aktuelle Position des Stahlbandes in der Presse wieder und dienen als Eingangssignal für die Regelung der Heizplattenschrägstellung. Mit diesem Verfahren können auch sehr lange kontinuierlich arbeitende Presse sicher im Bandverlauf beherrscht werden. Allerdings hat dieses Verfahren auch Nachteile. Am gravierendsten ist die Tatsache, dass durch das einseitige Anheben der Heizplatten, die Spanplattentoleranzen negativ beeinträchtigt werden. Andere Platteneigenschaften wie beispielsweise die Querzugsfestigkeit oder das Dichteprofil werden ebenfalls in Mitleidenschaft gezogen bzw. können asymmetrisch über die Plattenbreite auftreten. Zudem ist die Effektivität nicht immer zufrieden stellend. Wird bereichsweise die Heizplatte angehoben, entsteht in nachfolgenden Bereichen in denen die Heizplatte wieder parallel liegt, auf der zuvor angehobenen Seite, ein überhöhter spezifischer Pressdruck, der dem zuvor erzielten Bandlenkeffekt entgegenwirkt. Es kann deshalb nicht als ständiger Regelmechanismus verwendet werden, sondern ist nur zur Not-Bandverlaufsregelung in Extremsituationen einsetzbar.

Einfügung Stand der Technik D1 und D4

Aus der DE 199 31 176 A1 ist ein Verfahren zur Stahlbandführung in einer kontinuierlich arbeitenden Presse bekannt geworden, in der die Zurückstellung der Stahlbänder in die Längsachse I-I durch eine Achsverstellung der Rollstangeneinführungswelle um eine zentrale Drehachse III-III auf der Längsachse I-I erfolgt, wobei die Rollstangen je nach Achsstand der Rolistangeneinführungswellen im Einlaufbereich abweichend von der Orthogonalen, schräg in den Pressbereich eingeführt werden und durch ihre Laufrichtung einseitige Schubkräfte auf die Stahlbänder ausüben, die quer zur Längsachse wirken und korrigierend auf den Stahlbandverlauf einwirken.

Aus der DE 198 10 553 A1 ist ein Vorpresse für eine kontinuierlich arbeitende Presse bekannt geworden, die aus zwei endlos umlaufenden Bändern besteht, wobei zwischen den umlaufenden Bändern hydraulische Stellglieder mit entsprechenden Widerlagern die Pressgutmatte verdichten, bevor diese in die kontinuierlich arbeitende Presse einläuft. Vorpressen dienen in erster Linie dazu, das locker gestreute Material der Pressgutmatte einer schonenden Vorverdichtung zu unterwerfen um überschüssige Luft, bedingt durch den Streuprozess bei Bildung der Pressgutmatte, aus dieser zu entfernten.

Der Erfindung liegt die Aufgabe zugrunde ein Verfahren anzugeben, mit dem das aus der Längsachse verlaufende Stahlband und/oder die Rollstangen im Pressbereich im Lauf ohne negative Einflüsse auf das Produkt in Richtung Ideallinie rückstellend beeinflusst werden kann und eine Anlage zu schaffen zur Durchführung des Verfahrens.

Die Lösung dieser Aufgabe besteht für das Verfahren darin, dass die Rückstellung der Stahlbänder (5, 6) in die Längsachse I-I der kontinuierlich arbeitenden Presse durch ein zeitlich begrenztes Anheben einer der Längsseiten der Vorpresse mit den darin befindlichen Druckrollen erfolgt, so dass sich im Querschnitt der Pressgutmatte ein über die Breite abweichende Planparallelität formt und sich mit der höheren Längsseite der Pressgutmatte ein einseitig höherer Gegendruck an der Einlaufplatte des Keilverdichtereinlaufs einstellt, bis die Rückstellung des zu regelnden Stahlbandes beendet ist.

Eine Anlage zur Durchführung dieses Verfahrens besteht nach Anspruch 5 darin, dass die Rückstellung der Stahlbänder in die Längsachse I-I der kontinuierlich arbeitenden Presse durch ein zeitlich begrenztes Anheben einer der Längsseiten der Vorpresse und der darin befindlichen Druckrollen durch die Vorpressdruckeinheiten durchführbar ist, wobei die höhere Längsseite der Pressgutmatte die Rückstellung der Stahlbänder über die Einlaufplatte des Keilverdichtereinlaufs einsteuert.

Bei der erfindungsgemäßen Lösung der Aufgabe ist insbesondere von Vorteil, dass kein negativer Einfluß auf die Qualität bzw. die Werkstoffeigenschaften und die Maßhaltigkeit der fertigen Platte durch die Rückstellung der Stahlbänder auftritt. Durch eine bewusste Schrägstellung einer Längsseite der Vorpresse macht sich eine starke Auswirkung auf den Bandverlauf bemerkbar und eine Rückstellung des verlaufenden Stahlbandes kann eingeregelt werden. Als erforderliche hydraulische Stellglieder können dafür die bereits vorhandenen Vorpressdruckeinheiten zur Einstellung des Vorpressspaltes verwendet werden. Entscheidend ist jedoch, dass bei diesem Verfahren das Endprodukt, die Holzwerkstoffplatte, in ihren Eigenschaften nicht beeinflusst wird, da die einseitig verdichtete Pressgutmatte nur im Einlaufspalt der kontinuierlich arbeitenden Presse auf das Stahlband und/oder die Rollstangen korrigierend einwirkt aber nicht im Hauptpressbereich. Um das einseitige Anheben der Keilverdichtereinlaufplatte durch die schräg vorverdichtete Pressgutmatte zum Lenken der Rollstangen und des Stahlbandes nutzen zu können, muss es in die Bandlaufregeleinrichtung eingebunden werden. Hierzu ist es möglich den Rollstangen- und/oder Stahlbandverlauf im Pressspalt durch Verlaufssensoren zu messen und danach eine Längsseite der Vorpresse schräg einzustellen und mit der einseitig höheren Pressgutmatte auf den Keilverdichtereinlauf (KVE) einzuwirken. Dabei wird das Anheben durch eine Wegregelung oder indirekt durch eine druckgeregelte oder druckgesteuerte Entlastung in den Zylindern der Vorpressdruckeinheiten oder deren Stellantriebe durchgeführt.

Ein oder mehrere in der Pressenmitte, im Einlaufspalt und/oder im Auslauf der kontinuierlich arbeitenden Presse angebrachte Verlaufssensoren registrieren die vorhandene Lage der Stahlbänder. Mit dieser Information wird über einen Regelkreis und Regelungsprozessor und einen PID-Regler die erforderliche Rückstellbewegung durch die Vorpressdruckeinheiten durchgeführt.

Zum Ausgleich von grundlegenden Bandverlaufstendenzen kann eine Grundeinstellung mit fest eingestelltem Differenzhub oder eine fest eingestellte Druckdifferenz dienen.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: die Anlage zur Durchführung des Verfahrens nach der Erfindung in Seitenansicht,
- Figur 2: einen Querschnitt der Pressgutmatte nach einem Schnitt A-A aus Figur 1
- Figur 3: die kontinuierlich arbeitende Presse nach Figur 1 für die Durchführung des Verfahrens,
- Figur 4: die kontinuierlich arbeitende Presse nach Figur 3 in Draufsicht.

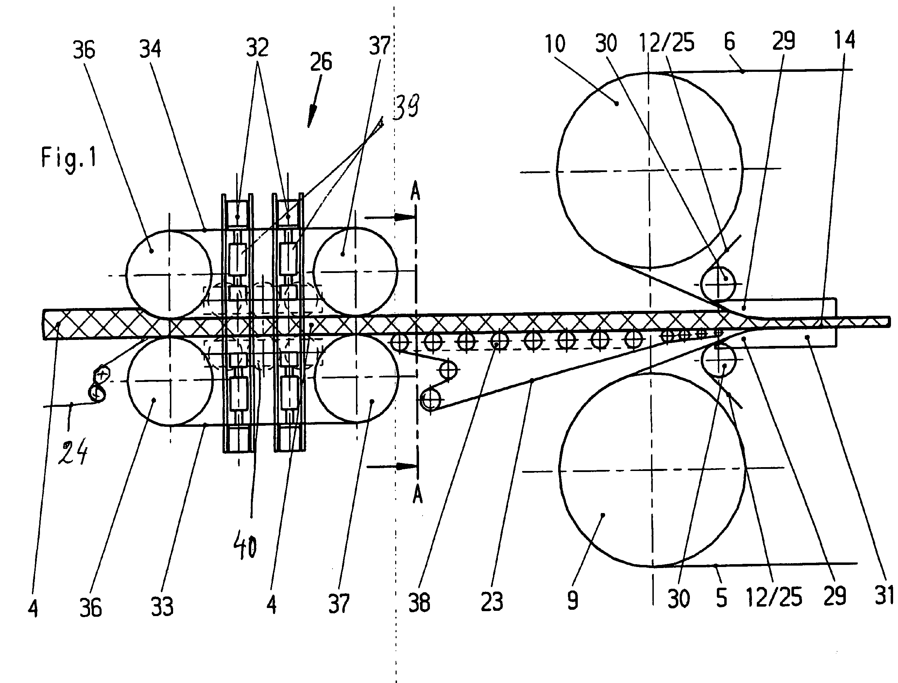

Die Anlage zur Durchführung des Verfahrens besteht nach den Figuren 1 bis 5 in ihren Hauptteilen aus der Vorpresse 26 und der kontinuierlich arbeitenden Presse 1. Weiter aus dem festen unteren Rahmenteil 2, dem beweglichen über Zylinderkolbenanordnungen 17 heb- und senkbaren oberen Rahmenteil 3 und den Zugrahmen-Pressenständern 22. Am oberen Rahmenteil 3 und unteren Rahmenteil 2 sind als Verlängerung Seitenschilder 21 fest angebracht und dienen als Verankerung und Lagerstelle für die Antriebstrommeln 7 und 8, für die Einlauftrommeln 9 und 10 und den Zylinderkolbenanordnungen 17. Der obere Rahmenteil 3 und der untere Rahmenteil 2 bestehen nur aus Stegblechen 15 und 16. Mehrere Zugrahmen-Pressenständer 22 bilden durch Aneinanderreihung und Anbringung der beheizten und/oder kühlbaren Pressplatten 18 und 19 die Länge L von Rahmenteil 3 und Rahmenteil 2 und somit der kontinuierlich arbeitenden Presse 1. Die aus den Stegblechen links und rechts herausragenden Ansätze bzw. Auskragungen mit den Zuglaschen 13 wirken als Widerlager für die Zylinderkolbenanordnungen 17 zum Heben und Senken des oberen Rahmenteils 3 mit den beheizbaren Pressplatten 18 und 19.

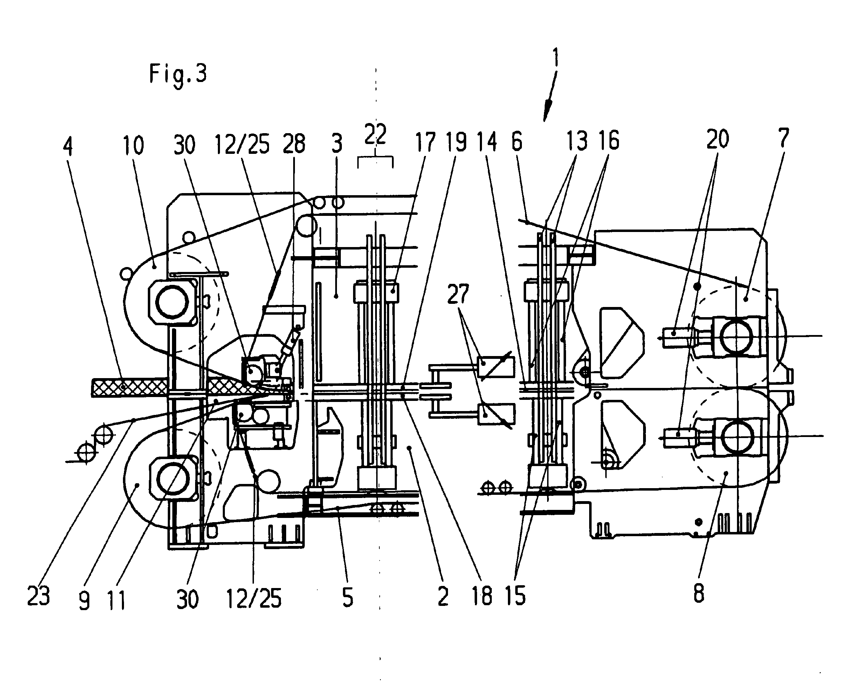

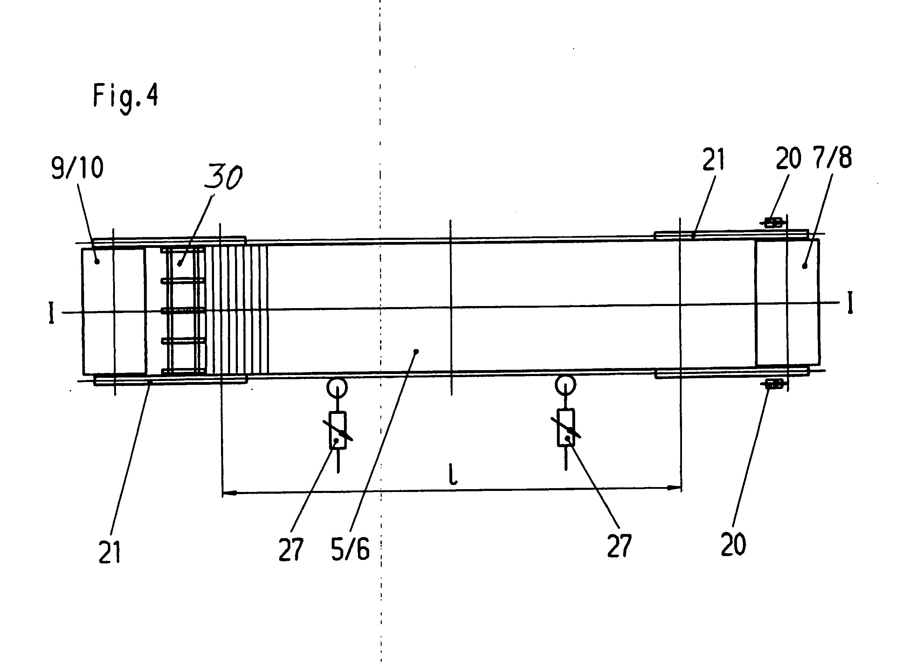

Aus den Figuren 1, und 3 ist weiter zu entnehmen, wie die Einlauftrommeln 9 und 10 den Einlaufspalt 11 bilden und wie sich die mit den Stahlbändern 5 und 6 um die Rahmenteile 2 und 3 umlaufenden in Führungsketten 25 geführten Rollstangen 12 gegen Widerlager der Rahmenteile 2 und 3 abstützen. Das heißt, die umlaufenden Rollstangen 12 sind zwischen den Pressplatten 18 und 19 und den Stahlbändern 5 und 6 mitrollend geführt und werden von Rollstangeneinführungsrädern 30 orthogonal ausgerichtet den Stahlbändern 5 und 6 übergeben. Die Pressgutmatte 4 wird mit dem Formband 24 der Vorpresse 26 übergeben, mit dem Beschickband 23 über die Stahlbänder 5 und 6 in den Einlaufspalt 11 sowie in den Pressbereich der kontinuierlich arbeitenden Presse 1 bzw. Pressspalt 14 eingeführt. Die Einjustierung und Grobregulierung der Stahlbänder 5 und 6 nach Figur 4 erfolgt weiter auf die Längsachse I-I durch Verstellung der Antriebstrommelachsen mittels der Stellantriebe 20.

Wie aus DE 43 01 594 C2 bekannt, besteht der Einlaufbereich nach den Figuren 1 und 5 aus dem Keilverdichtereinlauf 31 mit der Einlaufplatte 29 und dem Rollstangeneinführungsrad 30. Der Kompressionswinkel im Einlaufspalt 11 ist mittels den auf die Einlaufplatte 29 heb- und senkbar wirkenden Stellenantrieben 28 einstellbar.

Die Vorpresse 26 besteht bekannterweise aus dem Gestell 32 oder Pressenrahmen, dem Vorpressbändern 33 und 34, die jeweils oberhalb und unterhalb der Pressgutmatte 4 um die Antriebsrollen 37, den Druckrollen 40 und den Umlenkrollen 36 umlaufend geführt sind, sowie die den Vorpressdruck ausübenden, aus Zylindern und Kolben bestehenden hydraulischen Vorpressdruckeinheiten 39. Aus der Vorpresse kommend wird die Pressgutmatte 4 über Stützrollen 38 geführt mit dem Beschickband 23 der kontinuierlich arbeitenden Presse 1 übergeben.

Durch die Vorpresse 26 und dem Rollstangeneinlaufwerk nach den Figuren 1 bis 5 und mit einer Bandverlaufsregelung wird eine feinfühlige Stahlbandverlaufsregelung ermöglicht, wobei die Zurückstellung der Stahlbänder 5 und 6 in die Längsachse I-I gemäß der Erfindung durch ein einseitiges Anheben eines der Längsseiten der Vorpresse 26 und dadurch mit der schräg geformten Pressgutmatte 4 erfolgt. Damit entsteht eine einseitige Erhöhung der Pressgutmatte 4 und ein einseitiger Gegendruck auf die Einlaufplatte 29 die damit auf die Stellbänder 5 und 6 rückstellend einwirkt.

Die Rückstellung der Stahlbänder 5 und 6 parallel und längs der Längsachse I-I wird eingeleitet aufgrund der Mess-Signale von an der kontinuierlich arbeitenden Presse 1 angeordneten und an den Stahlbänderkanten kontaktgebenden Verlaufssensoren 27. Dabei wertet ein Regelungsprozessor die Istmeßwerte der Sensoren aus und ermittelt über einen Regelalgorithmus Ausgangssignale, die als Stellwertsignale an die Vorpressdruckeinheit 39 ausgegeben werden und somit mit der einseitig erhöhten Pressgutmatte 4 dem Stahlbandverlauf entgegenwirken.

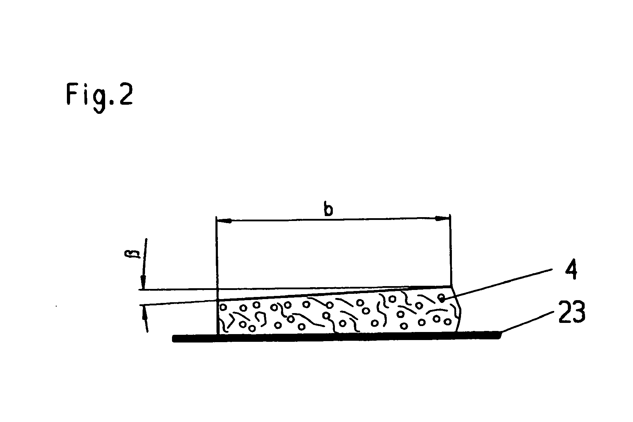

Wie die Figur 2 zeigt, weist die Pressgutmatte 4 durch die einseitige Belastung an einer Längsseite eine um den Winkel β erhöhte Querschnittshöhe auf.

### Bezugszeichenliste

- 1.: kontinuierlich arbeitende Presse
- 2.: Rahmenteil unten
- 3.: Rahmenteil oben
- 4.: Pressgutmatte
- 5.: Stahlband unten
- 6.: Stahlband oben
- 7.: Antriebstrommel unten
- 8.: Antriebstrommel oben
- 9.: Einlauftrommel unten
- 10.: Einlauftrommel oben
- 11.: Einlaufspalt
- 12.: Rollstangen
- 13.: Zuglaschen
- 14.: Pressspalt
- 15.: Stegblech unten
- 16.: Stegblech oben
- 17.: Zylinderkolbenanordnungen
- 18.: Pressenplatte unten
- 19.: Pressenplatte oben
- 20.: Stellantrieb für Antriebstrommeln waagrecht
- 21.: Seitenschilder
- 22.: Zugrahmen-Pressenständer
- 23.: Beschickband
- 24.: Formband
- 25.: Führungsketten
- 26.: Vorpresse
- 27.: Verlaufssensoren
- 28.: Stellantrieb
- 29.: Einlaufplatte von Keilverdichtereinlauf
- 30.: Rollstangeneinführungsrad
- 31.: Keilverdichtereinlauf (KVE)
- 32.: Gestell zu 26
- 33.: Vorpressband unten
- 34.: Vorpressband oben
- 36.: Umlenkrolle
- 37.: Antriebsrolle
- 38.: Stützrollen
- 39.: Vorpressdruckeinheit
- 40.: Druckrollen
- β: Querschnittswinkel der Pressgutmatte 4
- I-I: Längsachse der kontinuierlich arbeitenden Presse 1
- b: Breite der Pressgutmatte

## Patentansprüche

1. Verfahren zur Stahlbandführung in einer kontinuierlich arbeitenden Presse (1) zur Herstellung von Spanplatten, Faserplatten und Sperrholzplatten oder Kunststoffplatten, mit den Pressdruck übertragenden sowie das zu pressende Gut durch die Presse ziehenden, flexiblen, endlosen Stahlbändern (5 und 6), wobei die Pressgutmatte (4) auf einem sich kontinuierlich bewegendem Formband (24) in eine Vorpresse (26), bestehend aus einem Gestell (32), den Vorpressdruck übertragenden hydraulischen aus Zylindern und Kolben bestehenden Vorpressdruckeinheiten (39) und um Antriebsrollen (37), Druckrollen (40) und Umlenktrommeln (36) umlaufenden Vorpressbändem (33, 34),
und daraus über einen Keilverdichtereinlauf (31) in den Einlaufbereich der kontinuierlich arbeitenden Presse (1) zwischen die Stahlbänder (5 und 6) in den Pressspalt (14) eingerührt wird, die Stahlbänder (5 und 6) über Antriebstrommeln (7 und 8) und Einlauftrommeln (9 und 10) um einen oberen und unteren Rahmenteil (2 und 3) geführt sind und die sich mit einstellbarem Pressspalt (14) über mitlaufende, mit ihren Achsen quer zur Banddurchlaufrichtung geführte Rollstangen (12) gegen Widerlager an den Rahmenteilen (2 und 3) angebrachten beheizten Pressplatten (18 und 19) abstützen, wobei der Verlauf der Stahlbänder (5, 6) aus der Längsachse I-I mittels über den Stahlbandlängskanten angeordneten Verlaufssensoren (27) gemessen und mit einer Bandlaufregeleinrichtung in die Längsachse I-I der kontinuierlich arbeitenden Presse eingeregelt wird, **dadurch gekennzeichnet, dass** die Rückstellung der Stahlbänder (5, 6) in die Längsachse (I-I) der kontinuierlich arbeitenden Presse (1) durch ein zeitlich begrenztes Anheben einer der Längsseiten der Vorpresse (26) mit den darin befindlichen Druckrollen (40) erfolgt, so dass sich im Querschnitt der Pressgutmatte (4) ein über die Breite (b) abweichende Planparallelität formt und sich mit der höheren Längsseite der Pressgutmatte (4) eine einseitig höherer Gegendruck an der Einlaufplatte (29) des Keilverdichtereinlaufs (31) einstellt, bis die Rückstellung des zu regelnden Stahlbandes (5, 6) beendet ist.

2. Verfahren zur Stahlbandführung nach Anspruch 1 **dadurch gekennzeichnet, dass** die Rückstellung des aus der Längsachse (I-I) verlaufenden Stahlbandes (5 oder 6) durch ein zeitlich begrenztes Anheben der Vorpresse (26) durch ein weggeregeltes Anheben oder indirekt durch eine druckgeregelte oder druckgesteuerte Entlastung in den Zylindern der Vorpressdruckeinheiten (39) der Vorpresse (26) erfolgt.

3. Verfahren zur Stahlbandführung nach Anspruch 1, **gekennzeichnet durch** einen Regelkreis mit dem die Rückstellung der Stahlbänder (5, 6) **durch** die Vorpressdruckeinheiten (39) mittels der ermittelten Verlaufsmesswerte eines oder mehrerer Verlaufssensoren (27) und einem PID-Regler erfolgt.

4. Verfahren zur Stahlbandführung nach den Ansprüchen 1 bis 3 **gekennzeichnet durch** eine Grundeinstellung mit einem fest eingestelltem Differenzhub oder einer fest eingestellten Druckdifferenz

5. Anlage zur Durchführung des Verfahrens nach den Ansprüchen 1 bis 5 umfassend eine kontinuierliche Vorpresse (26) und eine kontinuierlich arbeitende Presse (1) zur Herstellung von Spanplatten, Faserplatten und Sperrholzplatten oder Kunststoffplatten und eine
Bandlaufregeleinrichtung zur Stahlbandführung in die Längsachse I-I der kontinuierlich arbeitenden Presse **dadurch gekennzeichnet, dass** die Rückstellung der Stahlbänder (5, 6) in die Längsachse (I-I) der kontinuierlich arbeitenden Presse (1) durch ein zeitlich begrenztes Anheben einer der Längsseiten der Vorpresse (26) und der darin befindlichen Druckrollen (40) durch die Vorpressdruckeinheiten (39) durchführbar ist, wobei die höhere Längsseite der Pressgutmatte (4) die Rückstellung der Stahlbänder (5, 6) über die Einlaufplatte (29) des Keilverdichtereinlaufs (31) einsteuert.

## Claims

1. A method for steel band guidance in a continuously working press (1) for producing chipboards, fiberboards and plywood boards or plastic boards, comprising flexible endless steel bands (5 and 6) which transmit the pressing pressure and draw the item to be pressed through the press, with the pressing item mat (4) being introduced on a continuously moving forming belt (24) into a prepress (26), consisting of a frame (32), hydraulic prepress pressure units (39) which transmit the prepress pressure and consist of cylinders and pistons, and prepress belts (33, 34) which revolve about drive rollers (37), pressure rollers (40) and deflection drums (36), and out of the same via a wedge compression inlet (31) in the inlet region of the continuously working press (1) between the steel bands (5 and 6) into the press nip (14), the steel bands (5 and 6) being guided via drive drums (7 and 8) and inlet drums (9 and 10) around an upper and lower frame part (2 and 3) and which rest with an adjustable press nip (14) via entrained roller bars which are guided transversally to the band running direction against abutments on heated pressing plates (18 and 19) which are attached to the frame parts (2 and 3), with the progress of the steel bands (5, 6) being measured from the longitudinal axis I-I by progress sensors (27) arranged over the longitudinal edges of the steel band and being adjusted with a band run control device into the longitudinal axis I-I of the continuously working press, **characterized in that** the return motion of the steel bands (5, 6) into the longitudinal axis (I-I) of the continuously working press (1) occurs by a time-limited lifting of one of the longitudinal sides of the prepress (26) with the pressure rollers (40) disposed therein, so that in the cross section of the pressing item mat (4) a plane-parallelism is formed which deviates over the width (b) and a unilaterally higher counter-pressure is obtained on the inlet plate (29) of the wedge compression inlet (31) with the higher longitudinal side of the pressing item mat (4) until the return motion of the steel band (5, 6) to be controlled has ended.

2. A method for steel band guidance according to claim 1, **characterized in that** the return motion of the steel band (5 or 6) running out of the longitudinal axis (I-I) occurs by a time-limited lifting of the prepress (26) by path-adjusted lifting or indirectly by a pressure-adjusted or pressure-controlled relief in the cylinders of the prepress pressure unit (39) of the prepress (26).

3. A method for steel band guidance according to claim 1, **characterized by** a control loop with which the return motion of the steel bands (5, 6) occurs by the prepress pressure units (39) by means of the determined measured values of progress from one or several progress sensors (27) and a PID-controller.

4. A method for steel band guidance according to the claims 1 to 3, **characterized by** a basic setting with a fixedly set differential lift or a fixedly set pressure difference.

5. An installation for performing the method according to the claims 1 to 5, comprising a continuous prepress (26) and a continuously working press (1) for producing chipboards, fiberboards and plywood boards or plastic boards, and a band run control device for guiding steel bands in the longitudinal axis I-I of the continuously working press, **characterized in that** the return motion of the steel bands (5, 6) into the longitudinal axis (I-I) of the continuously working press can be carried out by a time-limited lifting of one of the longitudinal sides of the prepress (26) and the pressure rollers (40) disposed therein by the prepress pressure units (39), with the higher longitudinal side of the press item mat (4) triggering the return motion of the steel bands (5, 6) via the inlet plate (29) of the wedge compression inlet (31).

## Revendications

1. Procédé pour le guidage d'une bande en acier dans une presse (1) fonctionnant en continu pour la fabrication de panneaux de particules, panneaux de fibres et panneaux de contreplaqués ou de panneaux en matière plastique, avec des bandes en acier sans fin (5 et 6) flexibles, transmettant la pression de pressage et tirant la matière à presser à travers la presse, dans lequel le tapis de matière à presser (4) est introduit sur une bande de formage (24) en déplacement continu dans une presse de préformage (26) composée d'un bâti (32), d'unités de pression de préformage (39) composées de cylindres et de pistons hydrauliques transmettant la pression de préformage et de bandes de presse de préformage (33, 34) tournant autour de rouleaux d'entraînement (37), de rouleaux presseurs (40) et de rouleaux de renvoi (36) et, sortant de celle-ci, en passant par une entrée de compactage en forme de coin (31), est introduit dans la zone d'entrée de la presse fonctionnant en continu (1) entre les bandes d'acier (5 et 6) dans l'espace de pressage (14), les bandes en acier (5 et 6) sont guidées sur des tambours d'entraînement (7 et 8) et des tambours d'entrée (9 et 10) autour d'une partie de châssis supérieure et d'une autre inférieure (2 et 3) et les plaques de presse (18 et 19) chauffées disposées sur les parties de châssis (2 et 3) s'appuient contre un contre-appui avec un espace de pressage (14) réglable par l'intermédiaire de tiges à rouleau (12) dont les axes sont perpendiculaires au sens de rotation de la bande, le parcours des bandes en acier (5, 6) à partir de l'axe longitudinal (I-I) étant mesuré au moyen de capteurs de direction (27) disposés sur les bords longitudinaux des bandes en acier et régulé par un dispositif de régulation de la bande sur l'axe longitudinal (I-I) de la presse fonctionnant en continu, **caractérisé en ce que** le rappel des bandes en acier (5, 6) dans l'axe longitudinal (I-I) de la presse fonctionnant en continu (1) est réalisé par un relevage limité dans le temps de l'un des côtés longitudinaux de la presse de préformage (26) avec les rouleaux presseurs (40) qui s'y trouvent, de sorte qu'il se forme dans la section du tapis de matière à presser (4) un parallélisme au plan variable sur la largeur (b) et qu'une contre-pression plus élevée unilatéralement s'établit du côté longitudinal le plus haut du tapis de matière à presser (4) sur la plaque d'entrée (29) de l'entrée de compactage en forme de coin (31) jusqu'à ce que le rappel de la bande en acier (5, 6) à régler soit terminé.

2. Procédé de guidage de bandes en acier selon la revendication 1, **caractérisé en ce que** le rappel de la bande en acier (5 ou 6) partant de l'axe longitudinal (I-I) par un relevage limité dans le temps de la presse de préformage (26) est réalisé par un relevage à course contrôlée ou indirectement par une décharge à pression régulée ou commandée des cylindres des unités de pression de préformage (39) de la presse de préformage (26).

3. Procédé de guidage de bandes en acier selon la revendication 1, **caractérisé en ce qu'**il prévoit un circuit de régulation réalisant le rappel des bandes en acier (5, 6) par les unités de pression de préformage (39) au moyen des valeurs d'orientation déterminées par un ou plusieurs capteurs d'orientation (27) et d'un régulateur PID.

4. Procédé de guidage de bandes en acier selon les revendications 1 à 3, **caractérisé en ce qu'**il prévoit un réglage de base avec une différence de course réglée de façon fixe ou une différence de pression réglée de façon fixe.

5. Installation pour la mise en oeuvre du procédé selon les revendications 1 à 5, comprenant une presse de préformage (26) en continu et une presse fonctionnant en continu (1) pour la fabrication de panneaux de particules, panneaux de fibres et panneaux de contreplaqués ou de panneaux en matière plastique et un dispositif de régulation de la course des bandes pour le guidage des bandes en acier dans l'axe longitudinal (I-I) de la presse fonctionnant en continu, **caractérisée en ce que** le rappel des bandes en acier (5, 6) dans l'axe longitudinal (I-I) de la presse fonctionnant en continu (1) peut être réalisé par un relevage limité dans le temps de l'un des côtés longitudinaux de la presse de préformage (26) et des rouleaux presseurs (40) se trouvant dans celle-ci par les unités de pression de préformage (39), le côté longitudinal le plus haut du tapis de matière à presser (4) contrôlant le rappel des bandes en acier (5, 6) à l'aide de la plaque d'entrée (29) de l'entrée de compactage en forme de coin (31).
